(19) Europäisches Patentamt
European Patent Office
Office européen des brevets

(11) EP 1 107 668 B2

(12) # NEUE EUROPÄISCHE PATENTSCHRIFT

Nach dem Einspruchsverfahren

(45) Veröffentlichungstag und Bekanntmachung des Hinweises auf die Entscheidung über den Einspruch:
**03.10.2018 Patentblatt 2018/40**

(45) Hinweis auf die Patenterteilung:
**28.01.2004 Patentblatt 2004/05**

(21) Anmeldenummer: **99942832.9**

(22) Anmeldetag: **10.08.1999**

(51) Int Cl.:
***A01N 57/20*** (2006.01) ***A01N 47/36*** (2006.01)
***A01N 47/22*** (2006.01) ***A01N 43/40*** (2006.01)
***A01N 43/18*** (2006.01) ***A01N 35/10*** (2006.01)
***A01P 13/00*** (2006.01) ***A01P 13/02*** (2006.01)

(86) Internationale Anmeldenummer:
**PCT/EP1999/005799**

(87) Internationale Veröffentlichungsnummer:
**WO 2000/008939 (24.02.2000 Gazette 2000/08)**

(54) **HERBIZIDE MITTEL FÜR TOLERANTE ODER RESISTENTE ZUCKERRÜBENKULTUREN**

HERBICIDES FOR TOLERANT OR RESISTANT SUGAR BEET CULTURES

AGENTS HERBICIDES POUR CULTURES DE BETTERAVE A SUCRE TOLERANTES OU RESISTANTES

(84) Benannte Vertragsstaaten:
**AT BE CH CY DE DK ES FI FR GB GR IE IT LI LU MC NL PT SE**

(30) Priorität: **13.08.1998 DE 19836673**

(43) Veröffentlichungstag der Anmeldung:
**20.06.2001 Patentblatt 2001/25**

(73) Patentinhaber: **Bayer CropScience AG**
**40789 Monheim am Rhein (DE)**

(72) Erfinder:
- **HACKER, Erwin**
  **D-65239 Hochheim (DE)**
- **STUEBLER, Hermann**
  **D-65527 Niedernhausen-Oberjosbach (DE)**
- **BIERINGER, Hermann**
  **D-65817 Eppstein (DE)**
- **WILLMS, Lothar**
  **D-65719 Hofheim (DE)**

(74) Vertreter: **von Renesse, Dorothea**
**König-Szynka-Tilmann-von Renesse**
**Patentanwälte Partnerschaft mbB**
**Postfach 11 09 46**
**40509 Düsseldorf (DE)**

(56) Entgegenhaltungen:

| | |
|---|---|
| **EP-A- 0 808 569** | **WO-A-93/04585** |
| **WO-A-95/05082** | **WO-A-96/34528** |
| **WO-A-97/36488** | **WO-A-98/09525** |
| **WO-A1-97/31535** | **WO-A1-98/24321** |
| **US-A- 5 094 945** | **US-A- 5 561 236** |

- **DATABASE CROPU [Online] Derwent International 1998 : "Guideline on good plant protection practice. Beet." retrieved from STN Database accession no. 1998-90331 XP002127724 & BULL.OEPP (27, NO. 2-3, 363-83, 1997) CODEN: OEPBAO,**
- **CHEMICAL ABSTRACTS, vol. 128, no. 20, 18. Mai 1998 (1998-05-18) Columbus, Ohio, US; abstract no. 240663, WRIGHT, TERRY R. ET AL: "In vitro and whole-plant magnitude and cross-resistance characterization of two imidazolinone-resistant sugar beet (Beta vulgaris) somatic cell selections" XP002127723 & WEED SCI. (1998), 46(1), 24-29 ,**
- **DATABASE CROPU [Online] Derwent International 1998 HALUSCHAN M: "Which strategies for weed control in sugarbeet. (Question). (Welche Stategie zur Unkrautbekaempfung in Zuckerrueben. (Question))" retrieved from STN Database accession no. 1998-83737 XP002127725 & PFLANZENARZT (51, NO. 4, 15-17, 1998) 3 FIG. 8 TAB. CODEN: PFLZAQ,**
- **DATABASE CROPU [Online] Derwent International 1997 CLOUET P ET AL: "Weed control in sugar beet. One can do it simply, but adapted to the field and its flora. (Le desherbage des betteraves. On peut faire simple, mais adapte a la parcelle et a sa flore)" retrieved from STN Database accession no. 1997-82732 XP002127726 & PHYTOMA DEF.VEG. (1997, NO. 491, 34-36) 2 FIG. 4 TAB.,**

EP 1 107 668 B2

- **DATABASE CROPU [Online] Derwent International 1995 WOLFSBERGER T: "Weed control in sugarbeet. (Unkrautbekaempfung in Zuckerreube)" retrieved from STN Database accession no. 1995-81642 XP002127727 & PFLANZENARZT (48, 1-2, 9-12, 1995) 2 FIG. 4 TAB. 2 REF. CODEN: PFLZAQ,**
- **C TOMLIN (ED): "The Pesticide Manual, Tenth Edition" , FARNHAM, GB XP002099499 ISBN: 0-948404-79-5 Seite 1335 -Seite 1341**
- **DATABASE CROPU [Online] Derwent International HAMILL A S ET AL: "To evaluate weed control and tolerance in Liberty Link ( glufosinate ammonium) tolerant sugarbeets. (2 papers)." retrieved from STN Database accession no. 1999-88315 XP002127728 & RES.REP.EXPERT COMM.WEEDS EAST.CAN. (1998 MEET., 48-50) 2 TAB., Agr.+Agri-Food-Canada**
- **Product Label (Crop Protection Reference 14th edition 1998) for FUSION® herbicide; a product of Zeneca; active ingredients fluazifop-P-butyl and fenoxaprop-P-ethyl; Veröffentlicht: 1998-allerdings ohne taggenaues Datum**
- **Product Label (Crop Protection Reference 14th edition 1998) for FUSILADE®DX II herbicide; a product of Zeneca; active ingredient fluazifop-P-butyl; Veröffentlicht: 1998- allerdings ohne taggenaues Datum**
- **Product Label (Crop Protection Reference 14th edition 1998) for OPTION®II herbicide; a product of AgrEvo; active ingredient fenoxaprop-P-ethyl; Veröffentlicht: 1998- allerdings ohne taggenaues Datum**
- **Product Label (Crop Protection Reference 14th edition 1998) for PURSUIT® herbicide; a product of American Cyanamid; active ingredient imazethapyr; Veröffentlicht: 1998**
- **Product Label (Crop Protection Reference 13th edition 1997) for PURSUIT® DG herbicide; a product of American Cyanamid; active ingredient imazethapyr; Veröffentlicht: 1997**
- **Product Label (Crop Protection Reference 14th edition 1998) for SELECT® 2EC herbicide; a product of Valent; active ingredient clethodim; Veröffentlicht: 1998- allerdings ohne taggenaues Datum**
- **Product Label (Crop Protection Reference 14th edition 1998) for RAPTOR® herbicide; a product of American Cyanamid; active ingredient imazamox; Veröffentlicht: 1998- allerdings ohne taggenaues Datum**
- **Product Sheet (Crop Protection with Chemicals 1998) for LIBERTY (glufosinaten ammonium), manufactured by AgrEvo (now Bayer):(Crop Protection with Chemicals; Redaktionsschluss: Februar 1998)**
- **Product Sheet (Crop Protection with Chemicals 1998) for POAST ULTRY (sethoxydim), manufactured by BASF; (Crop Protection with Chemicals; Redaktionsschluss: Februar 1998)**
- **Product Sheet (Crop Protection with Chemicals 1998) for PURSUIT (imazethapyr), manufactured by Cyanamid Crop Protection; (Crop Protection with Chemicals Redaktionsschluss: Februar 1998)**


Bemerkungen:

Die Akte enthält technische Angaben, die nach dem Eingang der Anmeldung eingereicht wurden und die nicht in dieser Patentschrift enthalten sind.

## Beschreibung

Die Erfindung liegt auf dem Gebiet der Pflanzenschutzmittel, die gegen Schadpflanzen in toleranten oder resistenten Kulturen von Zuckerrüben eingesetzt werden können und als Herbizidwirkstoffe eine Kombination von zwei oder mehreren Herbiziden enthalten.

Mit der Einführung von toleranten oder resistenten Zuckerrübensorten und -linien, insbesondere von transgenen Zuckerrübensorten und -linien, wird das herkömmliche Unkrautbekämpfungssystem um neue, per se in herkömmlichen Zuckerrübensorten nicht-selektive Wirkstoffe ergänzt. Die Wirkstoffe sind beispielsweise die bekannte breitwirksame Herbizide wie Glyphosate, Sulfosate, Glufosinate, Bialaphos und Imidazolinon-Herbizide [Herbizide (A)], die nunmehr in den jeweils für sie entwickelten toleranten Kulturen eingesetzt werden können. Die Wirksamkeit dieser Herbizide gegen Schadpflanzen in den toleranten Kulturen liegt auf einem hohen Niveau, hängt jedoch - ähnlich wie bei anderen Herbizidbehandlungen - von der Art des eingesetzten Herbizids, dessen Aufwandmenge, der jeweiligen Zubereitungsform, den jeweils zu bekämpfenden Schadpflanzen, den Klima- und Bodenverhältnissen, etc. ab. Ferner weisen die Herbizide Schwächen (Lücken) gegen spezielle Arten von Schadpflanzen auf. Ein weiteres Kriterium ist die Dauer der Wirkung bzw. die Abbaugeschwindigkeit des Herbizids. Zu berücksichtigen sind gegebenenfalls auch Veränderungen in der Empfindlichkeit von Schadpflanzen, die bei längerer Anwendung der Herbizide oder geographisch begrenzt auftreten können. Wirkungsverluste bei einzelnen Pflanzen lassen sich nur bedingt, wenn überhaupt, durch höhere Aufwandmengen der Herbizide ausgleichen. Außerdem besteht immer Bedarf für Methoden, die Herbizidwirkung mit geringerer Aufwandmenge an Wirkstoffen zu erreichen. Eine geringere Aufwandmenge reduziert nicht nur die für die Applikation erforderliche Menge eines Wirkstoffs, sondern reduziert in der Regel auch die Menge an nötigen Formulierungshilfsmitteln. Beides verringert den wirtschaftlichen Aufwand und verbessert die ökologische Verträglichkeit der Herbizidbehandlung.

Eine Möglichkeit zur Verbesserung des Anwendungsprofils eines Herbizids kann in der Kombination des Wirkstoffs mit einem oder mehreren anderen Wirkstoffen bestehen, welche die gewünschten zusätzlichen Eigenschaften beisteuern. Allerdings treten bei der kombinierten Anwendung mehrerer Wirkstoffe nicht selten Phänomene der physikalischen und biologischen Unverträglichkeit auf, z. B. mangelnde Stabilität einer Coformulierung, Zersetzung eines Wirkstoffes bzw. Antagonismus der Wirkstoffe. Erwünscht dagegen sind Kombinationen von Wirkstoffen mit günstigem Wirkungsprofil, hoher Stabilität und möglichst synergistisch verstärkter Wirkung, welche eine Reduzierung der Aufwandmenge im Vergleich zur Einzelapplikation der zu kombinierenden Wirkstoffe erlaubt.

Überraschenderweise wurde nun gefunden, daß Wirkstoffe aus der Gruppe der genannten breitwirksamen Herbizide (A) in Kombination mit bestimmten Herbiziden (B) in besonders günstiger Weise zusammenwirken, wenn sie in den Zuckerrübenkulturen eingesetzt werden, die für die selektive Anwendung der erstgenannten Herbizide geeignet sind.

Gegenstand der Erfindung ist somit die Verwendung von Herbizid-Kombinationen zur Bekämpfung von Schadpflanzen in Zuckerrübenkulturen, dadurch gekennzeichnet, dass die jeweilige Herbizid-Kombination einen wirksamen Gehalt an

(A) einem breitwirksamen Herbizid Glufosinate-ammonium (A1)
und

(B) einem Herbizid aus der Gruppe der Verbindungen, welche aus

(B1) Triflusulfuron-methyl.
(B2) Phenmedipham, Clopyralid,
(B3) Haloxyfop-P und dessen Ester, Haloxyfop und dessen Ester, und
(B4) Cycloxydim, Clethodim besteht,

aufweist und die Zuckerrübenkulturen gegenüber den in der Kombination enthaltenen Herbiziden (A) und (B), gegebenenfalls in Gegenwart von Safenern, tolerant sind.

Ebenso ist Gegenstand der Erfindung die Verwendung von Herbizid-Kombinationen zur Bekämpfung von Schadpflanzen in Zuckerrübenkulturen, dadurch gekennzeichnet, dass die jeweilige Herbizid-Kombination einen wirksamen Gehalt an

(A) dem breitwirksamen Herbizid Glyphosate-isopropylammonium (A2)
und

(B) einem Herbizid aus der Gruppe der Verbindungen, welche aus

(B1) Ethofumesate.

(B3) Fenoxaprop-P und dessen Ester, Fenoxaprop und dessen Ester, Fluazifop-P und dessen Ester, Fluazifop und dessen Ester, Haloxyfop-P und dessen Ester, Haloxyfop und dessen Ester, und

(B4) Sethoxydim, Cycloxydim, Clethodim besteht,

aufweist und die Zuckerrübenkulturen gegenüber den in der Kombination enthaltenen Herbiziden (A) und (B), gegebenenfalls in Gegenwart von Safenern, tolerant sind.

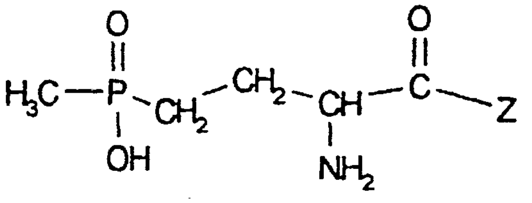

(A1)

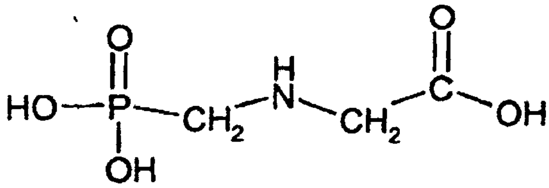

(A2)

Die Verbindungen sind mit dem "common name" bezeichnet und aus dem "Pesticide Manual" 11th Ed., British Crop Protection Council 1997 (im folgenden auch abgekürzt als "PM") bekannt. Neben den erfindungsgemäßen Herbizid-Kombinationen können weitere Pflanzenschutzmittelwirkstoffe und im Pflanzenschutz übliche Hilfsstoffe und Formulierungshilfsmittel verwendet werden.

Synergistische Wirkungen werden bei gemeinsamer Ausbringung der Wirkstoffe (A) und (B) beobachtet, können jedoch auch bei zeitlich getrennter Anwendung (Splitting) festgestellt werden. Möglich ist auch die Anwendung der Herbizide oder der Herbizid-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die simultane Anwendung der Wirkstoffe der jeweiligen Kombination, gegebenenfalls in mehreren Portionen. Aber auch die zeitversetzte Anwendung der Einzelwirkstoffe einer Kombination ist möglich und kann im Einzelfall vorteilhaft sein. In diese Systemanwendung können auch andere Pflanzenschutzmittel wie Fungizide, Insektizide, Akarizide etc. und/oder verschiedene Hilfsstoffe, Adjuvantien und/oder Düngergaben integriert werden.

Die synergistischen Effekte erlauben eine Reduktion der Aufwandmengen der Einzelwirkstoffe, eine höhere Wirkungsstärke gegenüber derselben Schadpflanzenart bei gleicher Aufwandmenge, die Kontrolle bislang nicht erfasster Arten (Lücken), eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Bespielsweise werden durch die erfindungsgemäßen Kombinationen aus (A)+(B) synergistische Wirkungssteigerungen möglich, die weit und in unerwarteter Weise über die Wirkungen hinausgehen, die mit den Einzelwirkstoffen (A) und (B) erreicht werden.

In WO-A-98/09525 ist bereits ein Verfahren zur Bekämpfung von Unkräutern in transgenen Kulturen beschrieben, welche gegenüber phosphorhaltigen Herbiziden wie Glufosinate oder Glyphosate resistent sind, wobei Herbizid-Kombinationen eingesetzt werden, welche Glufosinate oder Glyphosate und mindestens ein Herbizid aus der Gruppe Prosulfuron, Primisulfuron, Dicamba, Pyridate, Dimethenamid, Metolachlor, Flumeturon, Propaquizafop, Atrazin, Clodinafop, Norflurazone, Ametryn, Terbutylazin, Simazin, Prometryn, NOA-402989 (3-Phenyl-4-hydroxy-6-chlorpyridazin), eine Verbindung der Formel

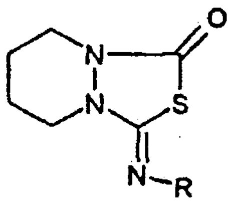

worin R = 4-Chlor-2-fluor-5-(methoxycarbonylmethylthio)-phenyl bedeutet, (bekannt aus US-A-4671819), CGA276854 = 2-Chlor-5-(3-methyl-2,6-dioxo-4-trifluormethyl-3,6-dihydro-2H-pyrimidin-1-yl)-benzoesäure-1-allyloxycarbonyl-1-methylethyl-ester (= WC9717, bekannt aus US-A-5183492) und 2-{N-[N-(4,6-Dimethyipyrimidin-2-yl)-aminocarbonyl]-aminosulfonyl}-benzoesäure-4-oxetanylester (bekannt aus EP-A-496701) enthalten. Einzelheiten über die erzielbaren oder erzielten Effekte gehen aus der Druckschrift WO-A-98/09525 nicht hervor. Beispiele zu synergistischen Effekten oder zur Durchführung des Verfahrens in bestimmten Kulturen fehlen ebenso wie konkrete Kombinationen aus zwei, drei oder weiteren Herbiziden.

Aus EP-A-0808569 und WO-A-96/34528 sind bereits einige Herbizid-Kombinationen mit Glyphosate und Triflusulfuron oder dessen Ester, Metamitron, Chloridazon oder Clopyralid oder dessen Salze bekannt. In eigenen Versuchen wurde gefunden, daß überraschenderweise große Unterschiede zwischen der Verwendbarkeit der in WO-A-98/09525 erwähnten Herbizid-Kombinationen und auch anderer neuartiger Herbizid-Kombinationen in Pflanzenkulturen bestehen.

Erfindungsgemäß werden Herbizid-Kombinationen bereitgestellt, die in toleranten Zuckerrübenkulturen besonders günstig eingesetzt werden können.

Die Verbindungen der Formel (A1) und (A2) sind bekannt oder können analog bekannten Verfahren hergestellt werden.

Die Formel (A1) umfaßt alle Stereoisomeren und deren Gemische, insbesondere das Racemat und das jeweils biologisch wirksame Enantiomere, z. B. L-Glufosinate und dessen Salze. Beispiele für Wirkstoffe der Formel (A1) sind folgende:

(A1.1) Glufosinate im engeren Sinne, d. h. D,L-2-Amino-4-[hydroxy(methyl)phosphinyl]-butansäure, (A1.2) Glufosinate-monoammoniumsalz,
(A1.3) L-Glufosinate, L- oder (2S)-2-Amino-4-[hydroxy(methyl)phosphinyl]-butansäure, (A1.4) L-Glufosinate-monoammoniumsalz,

Die genannten Herbizide (A1.1) bis (A1.4) werden über die grünen Teile der Pflanzen aufgenommen und sind als Breitspektrum-Herbizide oder Totalherbizide bekannt; sie sind Hemmstoffe des Enzyms Glutaminsynthetase in Pflanzen; siehe "The Pesticide Manual" 11th Edition, British Crop Protection Council 1997, S. 643-645 bzw. 120-121. Während ein Einsatzgebiet im Nachauflauf-Verfahren zur Bekämpfung von Unkräutern und Ungräsern in Plantagen- Kulturen und auf Nichtkulturland sowie mittels spezieller Applikationstechniken auch zur Zwischenreihenbekämpfung in landwirtschaftlichen Flächenkulturen wie Mais, Baumwolle u.a. besteht, nimmt die Bedeutung der Verwendung als selektive Herbizide in resistenten transgenen Pflanzenkulturen zu. Glufosinate wird üblicherweise in Form eines Salzes, vorzugsweise des Ammoniumsalzes eingesetzt. Das Racemat von Glufosinate bzw. Glufosinate-ammonium wird alleine üblicherweise in Dosierungen ausgebracht, die zwischen 200 und 2000 g AS/ha (= g a.i./ha = Gramm Aktivsubstanz pro Hektar) liegen. Glufosinate ist in diesen Dosierungen vor allem dann wirksam, wenn es über grüne Pflanzenteile aufgenommen wird. Da es im Boden mikrobiell innerhalb weniger Tage abgebaut wird, hat es keine Dauerwirkung im Boden. Ähnliches gilt auch für den verwandten Wirkstoff Bialaphos-Natrium (auch Bilanafos-Natrium); siehe "The Pesticide Manual" 11th Ed., British Crop Protection Council 1997 S. 120-121. In den erfindungsgemäßen Kombinationen benötigt man in der Regel deutlich weniger Wirkstoff (A1), beispielsweise eine Aufwandmenge im Bereich von 20 bis 800, vorzugsweise 20 bis 600 Gramm Aktivsubstanz Glufosinate pro Hektar (g AS/ha oder g a.i./ha). Entsprechende Mengen, vorzugsweise in Mol pro Hektar umgerechnete Mengen, gelten auch für Glufosinate-ammonium und Bialafos bzw. Bialafos-Natrium.

Die Kombinationen mit den blattwirksamen Herbiziden (A1) werden zweckmäßig in Zuckerrübenkulturen eingesetzt, die gegenüber den Verbindungen (A1) resistent oder tolerant sind. Einige tolerante Zuckerrübenkulturen, die gentechnisch erzeugt wurden, sind bereits bekannt und werden in der Praxis eingesetzt; vgl. Artikel in der Zeitschrift "Zuckerrübe" 47. Jahrgang (1998), S. 217 ff.; zur Herstellung transgener Pflanzen, die gegen Glufosinate resistent sind, vgl. EP-A-0242246, EP-A-242236, EP-A-257542, EP-A-275957, EP-A-0513054.

Die Verbindung (A2) ist das

(A2.2) Glyphosate-monoisopropylammoniumsalz.

Glyphosate wird üblicherweise in Form eines Salzes, vorzugsweise des Monoisopropylammoniumsalzes oder des Trimethylsulfoxoniumsalzes (=Trimesiumsalzes = Sulfosate) eingesetzt. Bezogen auf die freie Säure Glyphosate liegt die Einzeldosierung im Bereich von 0,5-5 kg AS/ha. Glyphosate ist unter manchen anwendungstechnischen Aspekten dem Glufosinate ähnlich, jedoch ist es im Gegensatz dazu ein Hemmstoff für des Enzyms 5-Enolpyruvylshikimat-3-phosphat-Synthase in Pflanzen; siehe 'The Pesticide Manual" 11th Ed., British Crop Protection Council 1997 S. 646-649. In den erfindungsgemäßen Kombinationen benötigt man in der Regel Aufwandmengen im Bereich von 20 bis 1000, vorzugsweise 20 bis 800 g AS/ha Glyphosate.

Auch für die Verbindung (A2) sind bereits gentechnisch erzeugte tolerante Pflanzen bekannt und in der Praxis eingeführt worden; vgl. "Zuckerrübe" 47. Jahrgang (1998), S. 217 ff.; vgl. auch WO 92/00377, EP-A-115673, EP-A-409815.

Als Kombinationspartner (B) für die Komponente (A) kommen die Verbindungen der Untergruppen (B1) bis (B4) in den Grenzen der anspruchsaemäßen Lehre in Frage. Mögliche Kombinationspartner sind im Einzelnen:

(B1) gegen monokotyle und dikotyle Schadpflanzen wirksamen Herbiziden mit Blatt- und überwiegend Bodenwirkung aus der Gruppe bestehend aus (Angabe mit dem "common name" und der Referenzstelle aus "The Pesticide Manual" 11th Ed., British Crop Protection Council 1997, abgekürzt "PM"):

(B1.1) Ethofumesate (PM, S. 484-486), d. h. Methansulfonsäure-(2-ethoxy-2,3-dihydro-3,3-dimethylben-zofuran-5-yl)-ester,

(B1.3) Triflusulfuron und dessen Ester, wie der Methylester, (PM, S. 1250-1252), d.h. 2-[4-(Dimethylami-no)-6-(2,2,2-trifluorethoxy)-1,3,5-triazin-2-yl]-carbamoylsulfamoyl]-6-methyl-benzoesäure bzw. -methylester,

(B2) überwiegend gegen dikotyle Schadpflanzen wirksamen Herbiziden, aus der Gruppe bestehend aus

(B2.2) Phenmedipham(PM, S. 948-949), d.h. N-[3-(Methoxycarbonylamino)phenyl]-carbaminsäure- 3-methylphenyl-ester,
(B2.3) Clopyralid (PM, S. 260-263), d.h. 3,6-Dichlorpyridin-2-carbonsäure und deren Salze,

(B3) Herbizide, die überwiegend blattwirksam sind und gegen monokotyle Schadpflanzen eingesetzt werden können, aus der Gruppe bestehend aus

(B3.2) Fenoxaprop-Punddessen Esterwieder Ethylester(PM, S. 519-520), d. h.(R)-2-[4-(6-Chlorbenzoxa- zol-2-yloxy)-phenoxy]-propionsäure bzw. -ethylester,
(B3.3) Fluazifop-P und dessen Ester wie der Butylester (PM, S. 556-557), d. h. (R)-2-[4-(5-Trifluormethyl-pyridyl-2-yloxy)-phenoxy]-propionsäure bzw. -butylester,
(B3.4) Haloxyfop und Haloxyfop-P und deren Ester wie der Methyl- oder der Etotylester (PM, S. 660-663), d. h. (R,S)- bzw. (R)-2-[4-(3-Chlor-5-trifluormethyl-pyrid-2-yloxy)-phenoxy]-propionsäure bzw. -methylester bzw. -etotylester,

(B4) Herbizide, die sowohl blattwirksam als auch bodenwirksam sind und gegen monokotyle Schadpflanzen eingesetzt werden können, aus der Gruppe bestehend aus

(B4.1) Sethoxydim (PM, S. 1101-1103), d. h. (E,Z)-2-(1-Ethoxyiminobutyl)-5-[2-(ethylthio)-propyl]-3-hy-droxy-cyclohex-2-enon,
(B4.2) Cycloxydim (PM, S. 290-291), d. h. 2-(1-Ethoxyiminobutyl)-3-hydroxy-5-thian-3-ylcyclohex-2-enon,
(B4.3) Clethodim (PM, S. 250-251), d. h. 2-{(E)1-[(E)-3-Chlorallyloxyimino]-propyl}-5-[-2(ethylthio)-propyl]-3-hydroxy-cyclohex-2-enon.

Die Aufwandmengen der Herbizide (B) können von Herbizid zu Herbizid stark variieren. Als grobe Richtgröße können folgende Bereiche gelten:

| | | |
|---|---|---|
| Zu Verbindungen (B1) | 1-5000 g AS/ha, vorzugsweise | |
| | Ethofumesat | 10-3000 g AS/ha, |
| | Chloridazon | 50-3000 g AS/ha, |
| | Triflursulfuron | 1-50 g AS/ha, |
| | Metamitron | 50-5000 g AS/ha, |

(fortgesetzt)

| | | |
|---|---|---|
| Zu Verbindungen (B2) | 5-5000 g AS/ha, vorzugsweise | |
| | Desmedipham, Phenmedipham | 10-5000 g AS/ha, |
| | Quinmerac | 10-1000 g AS/ha, |
| | Clopyralid | 5-200 g AS/ha, |
| Zu Verbindungen (B3) | 5-500 g AS/ha | |
| Zu Verbindungen (B4) | 10-1000 g AS/ha | |

Die Mengenverhältnisse der Verbindungen (A) und (B) ergeben sich aus den genannten Aufwandmengen für die Einzelstoffe und sind beispielsweise folgende Mengenverhältnisse von besonderem Interesse:

(A):(B) im Bereich von 1000:1 bis 1:1000, vorzugsweise von 200:1 bis 1:100,
(A1):(B1) vorzugsweise von 1000:1 bis 1:250, insbesondere von 200:1 bis 1:50,
(A1):(B2) vorzugsweise von 300:1 bis 1:250, insbesondere von 100:1 bis 1:100,
(A1):(B3) vorzugsweise von 400:1 bis 1:50, insbesondere von 200:1 bis 1:10,
(A1):(B4) vorzugsweise von 100:1 bis 1:50, insbesondere von 50:1 bis 1:20,
(A2):(B1) vorzugsweise von 2000:1 bis 1:50, insbesondere von 500:1 bis 1:20,
(A2):(B3) vorzugsweise von 500:1 bis 1:10, insbesondere von 200:1 bis 1:5,
(A2):(B4) vorzugsweise von 300:1 bis 1:10, insbesondere von 100:1 bis 1:50,

Von besonderem Interesse ist die Anwendung der Kombinationen

(A1.1) + (B1.3),
(A1.2) + (B1.3),
(A1.1) + (B2.2), (A1.1) + (B2.4), (A1.2) + (B2.2), (A1.2) + (B2.4),
(A1.1) + (B3.4),
-(A1.2) + (B3.4),
(A1.1) + (B4.2), (A1.1) + (B4.3),
(A1.2) + (B4.2), (A1.2) + (B4.3),
(A2.2) + (B1.1),
(A2.2) + (B2.2), (A2.2) + (B2.3), (A2.2) + (B2.4),
(A2.2) + (B3.1), (A2.2) + (B3.2), (A2.2) + (B3.3), (A2.2) + (B3.4),
(A2.2) + (B4.1), (A2.2) + (B4.2), (A2.2) + (B4.3).

In Einzelfällen kann es sinnvoll sein, eine Verbindung (A) mit mehreren Verbindungen (B), vorzugsweise aus den Klassen (B1), (B2), (B3) und (B4) zu kombinieren.
Weiterhin können die erfindungsgemäßen Kombinationen zusammen mit anderen Wirkstoffen beispielsweise aus der Gruppe der Safener, Fungizide, Insektizide und Pflanzenwachstumsregulatoren oder aus der Gruppe der im Pflanzenschutz üblichen Zusatzstoffe und Formulierungshilfsmittel eingesetzt werden.
Zusatzstoffe sind beispielsweise Düngemittel und Farbstoffe.
Bevorzugt sind anspruchsgemäße Herbizid-Kombinationen aus einer der Verbindungen (A) mit einer oder mehreren Verbindungen der Gruppe (B1) oder (B2) oder (B3) oder (B4).
Weiter bevorzugt sind Kombinationen von ein oder mehreren Verbindungen (A), z.B. (A1.2) + (A2.2), vorzugsweise einer Verbindung (A), mit einer oder mehreren Verbindungen (B) nach dem Schema:

(A) + (B1) + (B2), (A) + (B1) + (B3), (A) + (B1) + (B4), (A) + (B2) + (B3),
(A) + (B2) + (B4), (A) + (B3) + (B4), (A) + (B1) + (B2) + (B3),
(A) + (B1) + (B2) + (B4), (A) + (B1) + (B3) + (B4), (A) + (B2) + (B3) +(B4).

Dabei sind auch solche Kombinationen erfindungsgemäß, denen noch ein oder mehrere weitere Wirkstoffe anderer Struktur [Wirkstoffe (C)] zugesetzt werden wie

(A) + (B1) + (C), (A) + (B2) + (C), (A) + (B3) + (C) oder (A) + (B4) + (C),
(A) + (B1) + (B2) + (C), (A) + (B1) + (B3) + (C), (A) + (B1) + (B4) + (C),
(A) + (B2) + (B4) + (C), oder (A) + (B3) + (B4) + (C).

Für Kombinationen der letztgenannten Art mit drei oder mehr Wirkstoffen gelten die nachstehend insbesondere für erfindungsgemäße Zweierkombinationen erläuterten bevorzugten Bedingungen in erster Linie ebenfalls, sofern darin die erfindungsgemäßen Zweierkombinationen enthalten sind und bezüglich der betreffenden Zweierkombination.

Die erfindungsgemäßen Kombinationen (= herbiziden Mittel) weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzeistöcken oder anderen Dauerorganen austreiben, werden durch die Wirkstoffe gut erfaßt. Dabei ist es gleichgültig, ob die Substanzen im Vorsaat-, Vorauflauf- oder Nachauflaufverfahren ausgebracht werden. Bevorzugt ist die Anwendung im Nachauflaufverfahren oder im frühen Nachsaat-Vorauflaufverfahren.

Im einzelnen seien beispielhaft einige Vertreter der mono- und dikotylen Unkrautflora genannt, die durch die erfindungsgemäßen Verbindungen kontrolliert werden können, ohne daß durch die Nennung eine Beschränkung auf bestimmte Arten erfolgen soll.

Auf der Seite der monokotylen Unkrautarten werden z.B. Alopecurus spp., Avena spp., Setaria spp., Echinochloa spp., Apera spp. wie Apera spica venti, Agropyron spp. und Wildgetreideformen gut erfaßt, aber auch Digitaria spp., Lolium spp., Phalaris spp., Poa spp., sowie Cyperusarten aus der annuellen Gruppe und auf seiten der perennierenden Spezies Cynodon, Imperata sowie Sorghum und auch ausdauernde Cyperusarten.

Bei dikotylen Unkrautarten erstreckt sich das Wirkungsspektrum auf Arten wie z.B. Chenopodium spp., Matricaria spp., Kochia spp., Veronica spp., Viola spp., Anthemis spp., Polygonum spp., Stellaria spp., Thlaspi spp., Galium spp., Amaranthus spp., Solanum spp., Lamium spp., Cupsella spp. und Cirsium spp., aber auch Abutilon spp., Chrysanthemum spp., Ipomoea spp.,Pharbitis spp., Sida spp. und Sinapis spp., Convolvulus, Rumex und Artemisia.

Werden die erfindungsgemäßen Verbindungen vor dem Keimen auf die Erdoberfläche appliziert, so wird entweder das Auflaufen der Unkrautkeimlinge vollständig verhindert oder die Unkräuter wachsen bis zum Keimblattstadium heran, stellen jedoch dann ihr Wachstum ein und sterben schließlich nach Ablauf von drei bis vier Wochen vollkommen ab.

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so daß auf diese Weise eine für die Kulturpflanzen schädliche Unkrautkonkurrenz sehr früh und nachhaltig beseitigt wird.

Die erfindungsgemäßen herbiziden Mittel zeichnen sich im Vergleich zu den Einzelpräparaten durch eine schneller einsetzende und länger andauernde herbizide Wirkung aus. Die Regenfestigkeit der Wirkstoffe in den erfindungsgemäßen Kombinationen ist in der Regel günstig. Als besonderer Vorteil fällt ins Gewicht, daß die in den Kombinationen verwendeten und wirksamen Dosierungen von Verbindungen (A) und (B) so gering eingestellt werden können, daß ihre Bodenwirkung optimal ist. Somit wird deren Einsatz nicht nur in empfindlichen Kulturen erst möglich, sondern Grundwasser-Kontaminationen werden praktisch vermieden. Durch die erfindungsgemäßen Kombination von Wirkstoffen wird eine erhebliche Reduzierung der nötigen Aufwandmenge der Wirkstoffe ermöglicht.

Bei der gemeinsamer Anwendung von Herbiziden des Typs (A)+(B) treten überadditive (= synergistische) Effekte auf. Dabei ist die Wirkung in den Kombinationen stärker als die zu erwartende Summe der Wirkungen der eingesetzten Einzelherbizide. Die synergistischen Effekte erlauben eine Reduzierung der Aufwandmenge, die Bekämpfung eines breiteren Spektrums von Unkräutern und Ungräsem, einen schnelleren Eintritt der herbiziden Wirkung, eine längere Dauerwirkung, eine bessere Kontrolle der Schadpflanzen mit nur einer bzw. wenigen Applikationen sowie eine Ausweitung des möglichen Anwendungszeitraumes. Teilweise wird durch den Einsatz der Mittel auch die Menge an schädlichen Inhaltsstoffen in der Kulturpflanze, wie Stickstoff oder Ölsäure, reduziert. Die genannten Eigenschaften und Vorteile sind in der praktischen Unkrautbekämpfung gefordert, um landwirtschaftliche Kulturen von unerwünschten Konkurrenzpflanzen freizuhalten und damit die Erträge qualitativ und quantitativ zu sichern und/oder zu erhöhen. Der technische Standard wird durch diese neuen Kombinationen hinsichtlich der beschriebenen Eigenschaften deutlich übertroffen. Obgleich die erfindungsgemäßen Verbindungen eine ausgezeichnete herbizide Aktivität gegenüber mono- und dikotylen Unkräutern aufweisen, werden die toleranten bzw. kreuztoleranten Zuckerrübenpflanzen nur unwesentlich oder gar nicht geschädigt.

Darüberhinaus weisen die erfindungsgemäßen Mittel teilweise hervorragende wachstumsregulatorische Eigenschaften bei den Zuckerrübenpflanzen auf. Sie greifen regulierend in den pflanzeneigenen Stoffwechsel ein und können damit zur gezielten Beeinflussung von Pflanzeninhaltsstoffen eingesetzt werden. Desweiteren eignen sie sich auch zur generellen Steuerung und Hemmung von unerwünschtem vegetativen Wachstum, ohne dabei die Pflanzen abzutöten.

Aufgrund ihrer herbiziden und pflanzenwachstumsregulatorischen Eigenschaften können die Mittel zur Bekämpfung von Schadpflanzen in bekannten toleranten oder kreuztoleranten Zuckerrübenkulturen oder noch zu entwickelnden toleranten oder gentechnisch veränderten Zuckerrübenkulturen eingesetzt werden. Die transgenen Pflanzen zeichnen sich in der Regel durch besondere vorteilhafte Eigenschaften aus, neben den Resistenzen gegenüber den erfindungs- gemäßen Mitteln beispielsweise durch Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen

z. B. das Erntegut hinsichtlich Menge, Qualität, Lagerfähigkeit, Zusammensetzung und spezieller Inhaltsstoffe. So sind transgene Pflanzen mit erhöhtem Ölgehalt oder veränderter Qualität, z. B. anderer Fettsäurezusammensetzung des Emteguts bekannt.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen

- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche Resistenzen gegen andere Herbizide aufweisen, beispielsweise gegen Sulfonylharnstoffe (EP-A-0257993, US-A-5013659),
- transgene Kulturpflanzen, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- Transgene Zuckerrüben mit Resistenz gegen Herbizide des Typs der Acetolactatsynthasehemmer wie Imidazolinone (WO-A-98/02526, WO-A-98/02527, WO-A-98/2562).

Zahlreiche molekularbiologische Techniken, mit denen neue transgene Pflanzen mit veränderten Eigenschaften hergestellt werden können, sind im Prinzip bekannt; siehe z.B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996 oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe der obengenannten Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden.

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106).

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h. sowohl monokotyle als auch dikotyle Pflanzen. So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Gegenstand der Erfindung ist deshalb auch ein Verfahren zur Bekämpfung von unerwünschtem Pflanzenwuchs in toleranten Zuckerrübenkulturen, dadurch gekennzeichnet, daß man ein oder mehrere Herbizide des Typs (A) mit einem oder mehreren Herbiziden des Typs (B) auf die Schadpflanzen, Pflanzenteile davon oder die Anbaufläche appliziert.

Gegenstand der Erfindung sind auch die neuen Kombinationen aus Verbindungen (A)+(B) und diese enthaltende herbizide Mittel.

Die erfindungsgemäßen Wirkstoffkombinationen können sowohl als Mischformulierungen der zwei Komponenten, gegebenenfalls mit weiteren Wirkstoffen, Zusatzstoffen und/oder üblichen Formulierungshilfsmitteln vorliegen, die dann in üblicher Weise mit Wasser verdünnt zur Anwendung gebracht werden, oder als sogenannte Tankmischungen durch gemeinsame Verdünnung der getrennt formulierten oder partiell getrennt formulierten Komponenten mit Wasser hergestellt werden.

Die Verbindungen (A) und (B) oder deren Kombinationen können auf verschiedene Art formuliert werden, je nachdem welche biologischen und/oder chemischphysikalischen Parameter vorgegeben sind. Als allgemeine Formulierungsmöglichkeiten kommen beispielsweise in Frage: Spritzpulver (WP), emulgierbare Konzentrate (EC), wäßrige Lösungen (SL), Emulsionen (EW) wie Ölin-Wasser- und Wasser-in-Öi-Emulsionen, versprühbare Lösungen oder Emulsionen, Dispersionen auf Öl- oder Wasserbasis, Suspoemulsionen, Stäubemittel (DP), Beizmittel, Granulate zur Boden- oder Streuapplikation oder wasserdispergierbare Granulate (WG), ULV-Formulierungen, Mikrokapseln oder Wachse.

Die einzelnen Formulierungstypen sind im Prinzip bekannt und werden beispielsweise beschrieben in: Winnacker-Küchler, "Chemische Technologie", Band 7, C. Hauser Verlag München, 4. Aufl. 1986; van Valkenburg, "Pesticides Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v. Olphen, "Introduction to Clay Colloid Chemistry"; 2nd Ed., J. Wiley & Sons, N.Y. Marsden, "Solvents Guide", 2nd Ed., Interscience, N.Y. 1950; McCutcheon's, "Detergents and Emulsifiers Annual", MC Publ. Corp., Ridegewood N.J.; Sisley and Wood, "Encyclopedia of Surface Active Egents", Chem. Publ. Co. Inc., N.Y. 1964; Schönfeldt, "Grenzflächenaktive Äthylenoxidaddukte", Wiss. Verlagsgesellschaft, Stuttgart 1976, Winnacker-Küchfer, "Chemische Technologie", Band 7, C. Hauser Verlag München, 4. Aufl. 1986.

Auf der Basis dieser Formulierungen lassen sich auch Kombinationen mit anderen pestizid wirksamen Stoffen, wie anderen Herbiziden, Fungiziden oder insektiziden, sowie Safenern, Düngemitteln und/oder Wachstumsregulatoren herstellen, z.B. in Form einer Fertigformulierung oder als Tankmix.

.Spritzpulver (benetzbare Pulver) sind in Wasser gleichmäßig dispergierbare Präparate, die neben dem Wirkstoff außer einem Verdünnungs- oder Inertstoff noch Tenside ionischer oder nichtionischer Art (Netzmittel, Dispergiermittel), z.B. polyoxethylierte Alkylphenole, polyethoxylierte Fettalkohole oder -Fettamine, Alkansulfonate oder Alkylbenzolsulfonate, ligninsulfonsaures Natrium, 2,2'dinaphthylmethan-6,6'-disulfonsaures Natrium, dibutylnaphthalin- sulfonsaures Natrium oder auch oleoylmethyltaurinsaures Natrium enthalten.

Emulgierbare Konzentrate werden durch Auflösen des Wirkstoffs in einem organischen Lösungsmittel, z.B. Butanol, Cyclohexanon, Dimethylformamid, Xylol oder auch höhersiedenden Aromaten oder Kohlenwasserstoffe unter Zusatz von einem oder mehreren ionischen oder nichtionischen Tensiden (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propy- lenoxid-Ethylenoxid-Kondensationsprodukte, Alkylpolyether, Sorbitanfettsäureester, Polyoxyethylensorbitanfettsäureester oder Polyoxethylensorbitester.

Stäubemittel erhält man durch Vermahlen des Wirkstoffs mit fein verteilten festen Stoffen, z.B. Talkum, natürlichen Tonen, wie Kaolin, Bentonit und Pyrophyllit, oder Diatomeenerde.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach Verfahren wie Sprühtrocknung, Wirbelbett-Granulierung, Teller-Granulierung, Mischung mit Hochgeschwindigkeitsmischern und Extrusion ohne festes Inertmaterial hergestellt.

Die agrochemischen Zubereitungen enthalten in der Regel 0,1 bis 99 Gewichtsprozent, insbesondere 2 bis 95 Gew.-%, Wirkstoffe der Typen A und/oder B, wobei je nach Formulierungsart folgende Konzentrationen üblich sind:

> In Spritzpulvern beträgt die Wirkstoffkonzentration z.B. etwa 10 bis 95 Gew.-%, der Rest zu 100 Gew.-% besteht aus üblichen Formulierungsbestandteilen. Bei emulgierbaren Konzentraten kann die Wirkstoffkonzentration z.B. 5 bis 80 Gew.-%, betragen.
>
> Staubförmige Formulierungen enthalten meistens 5 bis 20 Gew.-% an Wirkstoff, versprühbare Lösungen etwa 0,2 bis 25 Gew.-% Wirkstoff.
>
> Bei Granulaten wie dispergierbaren Granulaten hängt der Wirkstoffgehalt zum Teil davon ab, ob die wirksame Verbindung flüssig oder fest vorliegt und welche Granulierhilfsmittel und Füllstoffe verwendet werden. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Konservierungs-, Frostschutz und Lösungsmittel, Füll-, Farb- und Trägerstoffe, Entschäumer, Verdunstungshemmer und Mittel, die den pH-Wert oder die Viskosität beeinflussen.

Beispielsweise ist bekannt, daß die Wirkung von Glufosinate-ammonium (A1.2) ebenso wie die seines L-Enantiomeren durch oberflächenaktive Substanzen verbessert werden kann, vorzugsweise durch Netzmittel aus der

Reihe der Alkylpolyglykolethersulfate, die beispielsweise 10 bis 18 C-Atomen enthalten und in Form ihrer Alkali- oder Ammoniumsalze, aber auch als Magnesiumsalz verwendet werden, wie $C_{12}/C_{14}$-Fettalkohol-diglykolethersulfat-Natrium (®Genapol LRO, Hoechst); siehe EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Weiterhin ist bekannt, daß Alkylpolyglykolethersulfate auch als Penetrationshilfsmittel und Wirkungsverstärker für eine Reihe anderer Herbizide, unter anderem auch für Herbizide aus der Reihe der Imidazolinone geeignet sind; siehe EP-A-0502014.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate, sowie versprühbare Lösungen werden vor der Anwendung üblicherweise nicht mehr mit weiteren inerten Stoffen verdünnt.

Die Wirkstoffe können auf die Pflanzen, Pflanzenteile, Pflanzensamen oder die Anbaufläche (Ackerboden) ausgebracht werden, vorzugsweise auf die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame herbizide Formulierung der erfindungsgemäßen Kombination an Wirkstoffen (A) und (B) hat den Vorteil der leichteren Anwendbarkeit, weil die Mengen der Komponenten bereits im richtigen Verhältnis zueinander eingestellt sind. Außerdem können die Hilfsmittel in der Formulierung aufeinander optimal abgestimmt werden, während ein Tank-mix von unterschiedlichen Formulierungen unerwünschte Kombinationen von Hilfstoffen ergeben kann.

A. Formulierungsbeispiele allgemeiner Art

a) Ein Stäubemittel wird erhalten, indem man 10 Gew.-Teile eines Wirkstoffs/Wirksstoffgemischs und 90 Gew.-Teile Talkum als Inertstoff mischt und in einer Schlagmühle zerkleinert.

b) Ein in Wasser leicht dispergierbares, benetzbares Pulver wird erhalten, indem man 25 Gew.-Teile eines Wirkstoffs/Wirksstoffgemischs, 64 Gew.-Teile kaolinhaltigen Quarz als Inertstoff, 10 Gew.-Teile ligninsulfonsaures Kalium und 1 Gew.-Teil oleoylmethyltaurinsaures Natrium als Netz- und Dispergiermittel mischt und in einer Stiftmühle mahlt.

c) Ein in Wasser leicht dispergierbares Dispersionskonzentrat wird erhalten, indem man 20 Gew.-Teile eines Wirkstoffs/Wirksstoffgemischs mit 6 Gew.-Teilen Alkylphenolpolyglykolether (®Triton X 207), 3 Gew.-Teilen Isotridecanolpolyglykolether (8 EO) und 71 Gew.-Teilen paraffinischem Mineralöl (Siedebereich z.B. ca. 255 bis 277°C) mischt und in einer Reibkugelmühle auf eine Feinheit von unter 5 Mikron vermahlt.

d) Ein emulgierbares Konzentrat wird erhalten aus 15 Gew.-Teilen eines Wirkstoffs/Wirksstoffgemischs, 75 Gew.-Teilen Cyclohexanon als Lösemittel und 10 Gew.-Teilen oxethyliertem Nonylphenol als Emulgator.

e) Ein in Wasser dispergierbares Granulat wird erhalten indem man

75 Gew.-Teile eines Wirkstoffs/Wirksstoffgemischs,
10 Gew.-Teile ligninsulfonsaures Calcium,
5 Gew.-Teile Natriumlaurylsulfat,
3 Gew.-Teile Polyvinylalkohol und
7 Gew.-Teile Kaolin

mischt, auf einer Stiftmühle mahlt und das Pulver in einem Wirbelbett durch Aufsprühen von Wasser als Granulierflüssigkeit granuliert.

f) Ein in Wasser dispergierbares Granulat wird auch erhalten, indem man

25 Gew.-Teile eines Wirkstoffs/Wirksstoffgemischs,
5 Gew.-Teile 2,2'-dinaphthylmethan-6,6'-disulfonsaures Natrium,
2 Gew.-Teile oleoylmethyltaurinsaures Natrium,
1 Gew.-Teil Polyvinylalkohol,
17 Gew.-Teile Calciumcarbonat und
50 Gew.-Teile Wasser

auf einer Kolloidmühle homogenisiert und vorzerkleinert, anschließend auf einer Perlmühle mahlt und die so erhaltene Suspension in einem Sprühturm mittels einer Einstoffdüse zerstäubt und trocknet.

Biologische Beispiele

1. Unkrautwirkung im Vorauflauf

Samen bzw. Rhizomstücke von mono- und dikotylen Unkrautpflanzen werden in Papptöpfen in sandiger Lehmerde ausgelegt und mit Erde abgedeckt. Die in Form von konzentrierten wäßrigen Lösungen, benetzbaren Pulvern oder Emulsionskonzentraten formulierten Mittel werden dann als wäßrige Lösung, Suspension bzw. Emulsion mit einer Wasseraufwandmenge von umgerechnet 600 bis 800 l/ha in unterschiedlichen Dosierungen auf die Oberfläche der Abdeckerde appliziert. Nach der Behandlung werden die Töpfe im Gewächshaus aufgestellt und unter guten Wachstumsbedingungen für die Unkräuter gehalten. Die optische Bonitur der Pflanzen- bzw. Auflaufschäden erfolgt nach dem Auflaufen der Versuchspflanzen nach einer Versuchszeit von 3 bis 4 Wochen im Vergleich zu unbehandelten Kontrollen. Wie die Testergebnisse zeigen, weisen die erfindungsgemäßen Mittel eine gute herbizide Vorauflaufwirksamkeit gegen ein breites Spektrum von Ungräsem und Unkräutern auf.

Dabei werden häufig Wirkungen der erfindungsgemäßen Kombinationen beobachtet, die die formale Summe der Wirkungen bei Einzelapplikation der Herbizide übertreffen (= synergistische Wirkung).
Wenn die beobachteten Wirkungswerte bereits die formale Summe der Werte zu den Versuchen mit Einzelapplikationen übertreffen, dann übertreffen sie den Erwartungswert nach Colby ebenfalls, der sich nach folgender Formel errechnet und ebenfalls als Hinweis auf Synergismus angesehen wird (vgl. S. R. Colby; in Weeds 15 (1967) S. 20 bis 22):

$$E = A+B-(A \cdot B/100)$$

Dabei bedeuten: A, B = Wirkung der Wirkstoffe A bzw. B in % bei a bzw. b g AS/ha; E = Erwartungswert in % bei a+b g AS/ha.
Die beobachteten Werte der Versuche zeigen bei geeigneten niedrigen Dosierungen eine Wirkung der Kombinationen, die über den Erwartungswerten nach Colby liegen.

2. Unkrautwirkung im Nachauflauf

Samen bzw. Rhizomstücke von mono- und dikotylen Unkräutern werden in Papptöpfen in sandigem Lehmboden ausgelegt, mit Erde abgedeckt und im Gewächshaus unter guten Wachstumsbedingungen angezogen. Drei Wochen nach der Aussaat werden die Versuchspflanzen im Dreiblattstadium mit den erfindungsgemäßen Mitteln behandelt. Die als Spritzpulver bzw. als Emulsionskonzentrate formulierten erfindungsgemäßen Mittel werden in verschiedenen Dosierungen mit einer Wasseraufwandmenge von umgerechnet 600 bis 800 l/ha auf die grünen Pflanzenteile gesprüht. Nach ca. 3 bis 4 Wochen Standzeit der Versuchspflanzen im Gewächshaus unter optimalen Wachstumsbedingungen wird die Wirkung der Präparate optisch im Vergleich zu unbehandelten Kontrollen bonitiert. Die erfindungsgemäßen Mittel weisen auch im Nachauflauf eine gute herbizide Wirksamkeit gegen ein breites Spektrum wirtschaftlich wichtiger Ungräser und Unkräuter auf.
Dabei werden häufig Wirkungen der erfindungsgemäßen Kombinationen beobachtet, die die formale Summe der Wirkungen bei Einzelapplikation der Herbizide übertreffen. Die beobachteten Werte der Versuche zeigen bei geeigneten niedrigen Dosierungen eine Wirkung der Kombinationen, die über den Erwartungswerten nach Colby (vgl. Bonitur in Beispiel 1) liegen.

3. Herbizide Wirkung und Kulturpflanzenverträglichkeit (Feldversuch)

Pflanzen von transgener Zuckerrübe mit einer Resistenz gegen ein oder mehrere Herbizide (A) wurden zusammen mit typischen Unkrautpflanzen im Freiland auf Parzellen der Größe 2 x 5m unter natürlichen Freilandbedingungen herangezogen; alternativ stellte sich beim Heranziehen der Zuckerrübenpflanzen die Verunkrautung natürlich ein. Die Behandlung mit den erfindungsgemäßen Mitteln und zur Kontrolle separat mit alleiniger Applikation der Komponentenwirkstoffe erfolgte unter Standardbedingungen mit einem Parzellen-Spritzgerät bei einer Wasseraufwandmenge von 200-300 Liter Wasser je Hektar in Parallelversuchen gemäß dem Schema aus Tabelle 1, d. h. im Vorsaat-Vorauflauf, im Nachsaat-Vorauflauf oder im Nachauflauf im frühen, mittleren oder späten Stadium.

Tabelle 1:

| Anwendungsschema - Beispiele | | | | |
|---|---|---|---|---|
| Applikation der Werkstoffe | Vorauflauf | Nachauflauf bis 2-Blatt | Nachauflauf 2-4-Blatt | Nachauflauf 6-Blatt |
| kombiniert" | | (A)+(B) | | |
| " | | | (A)+(B) | |
| " | | | | (A)+(B) |
| sequentiell" | (B1.1) | (A2.2) | | |
| " | (B1.1) | | (A2.2) | |
| " | | (A2.2) | (B2.2) | |
| " | | (B2.2) | (A2.2) | |
| " | | (B2.2) | | (A2.2) |
| " | | (A.2.2) | | (B2.2) |
| " | | (A2.2)+(B2.2) | | |
| " | | | (A2.2)+(B2.2) | |
| " | | | | (A2.2)+(B2.2) |
| " | (A) | (B) | | |
| " | | (B) | (A) | |
| " | | | (B) | (A) |
| " | | (A) | (B) | |
| " | | (A) | (B) | (B) |
| " | | (A)+(B) | (A)+(B) | |
| " | | (A) | | (A)+(B) |
| " | | | (A)+(B) | (B) |
| " | (A)+(B) | (A)+(B) | | |
| " | | (A)+(B) | (A)+(B) | |
| " | | (A)+(B) | (A)+(B) | (A)+(B) |
| Abkürzungen in Tabelle 1:<br>(B1.1) = Ethofumesate<br>(A2.2) = Glyphosat-isopropyiammonium<br>(B2.2) = Phenmedipham<br>(A) bzw. (B) bzw. (A1) = alternativ alle Herbizide des Typs (A) bzw. (B) bzw.(A1) gemäß Definition in der Beschreibung | | | | |

Im Abstand von 2, 4, 6 und 8 Wochen nach Applikation wurde die herbizide Wirksamkeit der Wirkstoffe bzw. Wirkstoffmischungen anhand der behandelten Parzellen im Vergleich zu unbehandelten Kontroll-Parzellen visuell bonitiert. Dabei wurde Schädigung und Entwicklung aller oberirdischen Pflanzenteile erfaßt. Die Bonitierung erfolgte nach einer Prozentskala (100% Wirkung = alle Pflanzen abgestorben; 50 % Wirkung = 50% der Pflanzen und grünen Pflanzenteile abgestorben; 0 % Wirkung = keine erkennbare Wirkung = wie Kontrollparzelle). Die Boniturwerte von jeweils 4 Parzellen wurden gemittelt.
Der Vergleich zeigte, daß die erfindungsgemäßen Kombinationen meist mehr, teilweise erheblich mehr herbizide Wirkung aufweisen als die Summe der Wirkungen der Einzelherbizide (=$E^a$). Die Wirkungen lagen in wesentlichen Abschnitten des Boniturzeitraums über den Erwartungswerten nach Colby (=$E^C$) (vgl. Bonitur in Beispiel 1) und weisen deshalb auf einen Synergismus hin. Die Zuckerrübenpflanzen dagegen wurden infolge der Behandlungen mit den herbiziden Mitteln nicht oder nur unwesentlich geschädigt.

Tabelle 2:

| Herbizide Wirkung im Zuckerrüben-Feldversuch | | | |
|---|---|---|---|
| Wirkstoff(e) | Dosis[1)] g AS/ha | Herbizide Wirkung[2)] in % gegen Setaria viridis | Schädigung an transgener Zuckerrübe |
| (A1.2) | 300<br>150<br>75<br>37,5 | 98<br>95<br>85<br>35 | 0<br>0<br>0<br>0 |
| (B1.3) | 17<br>8 | 20<br>0 | 0<br>0 |
| (A1.2) + (B1.3) | 37,5 + 8<br>75 + 8 | 55 ($E^a$=35)<br>90 ($E^a$=85) | 0<br>0 |
| Abkürzungen zu Tabelle 2: | | | |
| 1) = Applikation im 2-4-Blattstadium<br>2) = Bonitur 3 Wochen nach Applikation<br>(A1.2) = Glufosinate-ammonium<br>(B1.3) = Triflusulfuron-methyl | | | |

Siehe auch allgemein verwendete Abkürzungen nachstehend:
Allgemein verwendete Abkürzungen zu den Tabellen :

g AS/ha = Gramm Aktivsubstanz (= 100% Wirkstoff) pro Hektar
$E^a$ = Formale Summe der herbiziden Einzelwirkungen
$E^c$ = Erwartungswert nach Colby (vgl. Bonitur in Beispiel 1)
"transgene Zuckerrübe" = Zuckerrübe, die aufgrund eines Resistenzgens gegenüber dem jeweils verwendeten Wirkstoff (A) tolerant ist.

Tabelle 3:

| Herbizide Wirkung in Zuckerrübenkultur (Gewächshausversuch) | | | |
|---|---|---|---|
| Wirkstoff(e) | Dosis[1)] g AS/ha | Herbizide Wirkung[2)] in % gegen Galium aparine | Schädigung an transgener Zuckerrübe |
| (A1.2) | 500<br>250<br>125 | 85<br>60<br>45 | 0<br>0<br>0 |
| (B2.2) | 2000<br>1000<br>500 | 30<br>30<br>20 | 0<br>0<br>0 |
| 1) = Applikation im 4-5-Blattstadium<br>2) = Bonitur 3 Wochen nach Applikation<br>(A1.2) = Glufosinate-ammonium. (B2.2) = Phenmedipham<br>(B1.4) = Metamitron (B2.4) = Clopyralid | | | |

Tabelle 3: (fortgesetzt)

| Herbizide Wirkung in Zuckerrübenkultur (Gewächshausversuch) | | | |
|---|---|---|---|
| Wirkstoff(e) | Dosis[1)] g AS/ha | Herbizide Wirkung[2)] in % gegen Galium aparine | Schädigung an transgener Zuckerrübe |
| (B2.4) | 200<br>100<br>50 | 45<br>35<br>5 | 0<br>0<br>0 |
| (A1.2) + (B2.2) | 500 + 500<br>250 + 500<br>125 + 2000 | 96 ($E^c$=88)<br>85 ($E^a$=80)<br>81 ($E^a$=75) | 0<br>0<br>0 |
| (A1.2) + (B2.4) | 500 + 50<br>125 + 200 | 93 ($E^a$=90)<br>92 ($E^a$=90) | 0<br>0 |
| Abkürzungen zu Tabelle 3: siehe nach Tabelle 2 und außerdem | | | |
| [1)] = Applikation im 4-5-Blattstadium<br>[2)] = Bonitur 3 Wochen nach Applikation<br>(A1.2) = Glufosinate-ammonium (B2.2) = Phenmedipham<br>(B2.4) = Clopyralid | | | |

Tabelle 4:

| Herbizide Wirkung und Selektivität in Zuckerrübenkultur (Feldversuch) | | | |
|---|---|---|---|
| Wirkstoff(e) | Dosis[1)]g AS/ha | Herbizide Wirkung[2)] in % gegen Echinochloa crus-galli | Schädigung an transgener Zuckerrübe |
| (A1.2) | 65<br>10<br>0 | 85<br>60<br>45 | 0<br>0<br>0 |
| (B4.2) | 250<br>125<br>62,5 | 93<br>70<br>45 | 0<br>0<br>0 |
| (A1.2) + (B4.2) | 350 + 62,5<br>175 + 250 | 96 ($E^c$=55)<br>95 ($E^a$=93) | 0<br>0 |
| Abkürzungen zu Tabelle 4: siehe nach Tabelle 2 und außerdem | | | |
| [1)] = Applikation im 3-Blattstadium<br>[2)] = Bonitur 4 Wochen nach Applikation<br>(A1.2) = Glufosinate-ammonium<br>(B4.2) = Cycloxydim | | | |

Tabelle 5:

| Herbizide Wirkung und Selektivität in Zuckerrübenkultur (Feldversuch) | | | |
|---|---|---|---|
| Wirkstoff(e) | Dosis[1)]g AS/ha | Herbizide Wirkung[2)] in % gegen Avena fatua | Schädigung an transgener Zuckerrübe |
| (A1.2) | 600<br>300<br>150 | 95<br>65<br>30 | 3<br>0<br>0 |

(fortgesetzt)

| Herbizide Wirkung und Selektivität in Zuckerrübenkultur (Feldversuch) | | | |
|---|---|---|---|
| Wirkstoff(e) | Dosis[1)] g AS/ha | Herbizide Wirkung[2)] in % gegen Avena fatua | Schädigung an transgener Zuckerrübe |
| (B3.4) | 30<br>15 | 63<br>20 | 0<br>0 |
| (A1.2) + (B3.4) | 300 + 15<br>150 + 30 | 96 ($E^c$=85)<br>95 ($E^a$=93) | 0<br>0 |
| Abkürzungen zu Tabelle 5: siehe nach Tabelle 2 und außerdem | | | |
| [1)] = Applikation im 3-5-Blattstadium<br>[2)] = Bonitur 4 Wochen nach Applikation<br>(A1.2) = Glufosinate-ammonium<br>(B3.4) = Hatoxyfop-P-methyl | | | |

Tabelle 6:

| Herbizide Wirkung (Feldversuch) | | |
|---|---|---|
| Wirkstoff(e) | Dosis[1)] g AS/ha | Herbizide Wirkung[2)] in % gegen Galium aparine |
| (A2.2) | 1000<br>500<br>250<br>125 | 85<br>60<br>40<br>10 |
| (B2.2) | 2000<br>1000<br>500 | 30<br>30<br>20 |
| (A2.2) + (B2.2) | 500+500<br>500+2000 | 85 ($E^a$=80)<br>93($E^a$=90) |
| Abkürzungen zu Tabelle 7: siehe nach Tabelle 2 und außerdem | | |
| [1)] = Applikation im 4-5-Blattstadium<br>[2)] = Bonitur 26 Tage nach Applikation<br>(A2.2) = Glyphosate-isopropylammonium<br>(B2.2) = Phenmedipham | | |

**Patentansprüche**

**1.** Verwendung von Herbizid-Kombinationen zur Bekämpfung von Schadpflanzen in Zuckerrübenkulturen, **dadurch gekennzeichnet, dass** die jeweilige Herbizid-Kombination einen wirksamen Gehalt an

(A) dem breitwirksamen Herbizid Glufosinate-ammonium (A1)
und
(B) einem Herbizid aus der Gruppe der Verbindungen, welche aus

(B1) Triflusulfuron-methyl,
(B2) Phenmedipham, Clopyralid,
(B3) Haloxyfop-P und dessen Ester, Haloxyfop und dessen Ester und
(B4) Cycloxydim und Clethodim besteht,

aufweist und die Zuckerrübenkulturen gegenüber den in der Kombination enthaltenen Herbiziden (A) und (B), gegebenenfalls in Gegenwart von Safenern, tolerant sind.

2. Verwendung von Herbizid-Kombinationen zur Bekämpfung von Schadpflanzen in Zuckerrübenkulturen, **dadurch gekennzeichnet, dass** die jeweilige Herbizid-Kombination einen wirksamen Gehalt an

(A) dem breitwirksamen Herbizid Glyphosate-isopropylammonium (A2) und
(B) einem Herbizid aus der Gruppe der Verbindungen, welche aus

(B1) Ethofumesate,
(B3) Fenoxaprop-P und dessen Ester, Fenoxaprop und dessen Ester, Fluazifop-P und dessen Ester, Fluazifop und dessen Ester, Haloxyfop-P und dessen Ester, Haloxyfop und dessen Ester und
(B4) Sethoxydim, Cycloxydim und Clethodim besteht,

aufweist und die Zuckerrübenkulturen gegenüber den in der Kombination enthaltenen Herbiziden (A) und (B), gegebenenfalls in Gegenwart von Safenern, tolerant sind.

3. Verwendung nach einem der Ansprüche 1 bis 2, **dadurch gekennzeichnet, dass** die Herbizid-Kombinationen in Gegenwart weiterer Pflanzenschutzmittelwirkstoffe verwendet werden.

4. Verwendung nach einem der Ansprüche 1 bis 3, **dadurch gekennzeichnet, dass** die Herbizid-Kombinationen zusammen mit im Pflanzenschutz üblichen Hilfsstoffen und Formulierungshilfsmitteln verwendet werden.

5. Verfahren zur Bekämpfung von Schadpflanzen in Zuckerrübenkulturen, **dadurch gekennzeichnet, dass** man die Herbizide der Herbizid-Kombination, definiert gemäß einem oder mehreren der Ansprüche 1 bis 3, gemeinsam oder getrennt im Vorauflauf, Nachauflauf oder im Vor- und Nachauflauf auf die Pflanzen, Pflanzenteile, Pflanzensamen oder die Anbaufläche appliziert.

6. Herbizide Zusammensetzung, **dadurch gekennzeichnet, dass** sie eine Kombination aus einem wirksamen Gehalt an

(A) dem breitwirksamen Herbizid Glufosinate-ammonium (A1)
und einem Herbizid (B) aus der Gruppe der Verbindungen, welche aus

(B1') Triflüsulfuron-methyl,
(B2') Phenmedipham, Clopyralid,
(B3') Haloxyfop-P-methyl und
(B4') Cycloxydim und Clethodim besteht,

und gegebenenfalls im Pflanzenschutz übliche Zusatzstoffe und Formulierungshilfsmittel enthält.

## Claims

1. The use of herbicide combinations for controlling harmful plants in sugar beet crops, wherein the herbicide combination in question comprises an effective content of

(A) the broad-spectrum herbicide glufosinate-ammonium (A1)
and
(B) a herbicide from the group of the compounds consisting of

(B1) triflusulfuron-methyl,
(B2) phenmedipham, clopyralid,
(B3) haloxyfop-P and its esters, haloxyfop and its esters, and
(B4) cycloxydim and clethodim,

and the sugar beet crops tolerate the herbicides (A) and (B) which are present in the combination, if appropriate in the presence of safeners.

2. The use of herbicide combinations for controlling harmful plants in sugar beet crops, wherein the herbicide combination in question comprises an effective content of

(A) the broad-spectrum herbicide glyphosate-isopropylammonium (A2)
and
(B) a herbicide from the group of the compounds consisting of

(B1) ethofumesate,
(B3) fenoxaprop-P and its esters, fenoxaprop and its esters, fluazifop-P and its esters, fluazifop and its esters, haloxyfop-P and its esters, haloxyfop and its esters and
(B4) sethoxydim, cycloxydim and clethodim,

or a combination of the herbicides ethofumesate, desmedipham and phenmedipham,
and the sugar beet crops tolerate the herbicides (A) and (B) which are present in the combination, if appropriate in the presence of safeners.

**3.** The use as claimed in any of claims 1 to 2, wherein the herbicide combinations are used in the presence of further active ingredients used in crop protection.

**4.** The use as claimed in any of claims 1 to 3, wherein the herbicide combinations are used together with auxiliaries conventionally used in crop protection and formulation auxiliaries.

**5.** A method of controlling harmful plants in sugar beet crops, which comprises applying the herbicides of the herbicide combination as defined in one or more of claims 1 to 3 jointly or separately, pre-emergence, post-emergence or pre- and post-emergence to the plants, plant organs, plant seeds or the area under cultivation.

**6.** A herbicidal composition which comprises a combination of an effective content of

(A) the broad-spectrum herbicide glufosinate-ammonium (A1)
and a herbicide (B) from the group of the compounds consisting of

(B1') triflusulfuron-methyl,
(B2') phenmedipham, clopyralid,
(B3') haloxyfop-P-methyl and
(B4') cycloxydim and clethodim,

and, if appropriate, formulation auxiliaries and additives conventionally used in crop protection.

## Revendications

**1.** Utilisation de combinaisons d'herbicides pour la lutte contre les mauvaises herbes dans des cultures de betterave sucrière, **caractérisée en ce que** la combinaison d'herbicides concernée présente une teneur efficace en

(A) l'herbicide à spectre large glufosinate-ammonium (A1)
et
(B) un herbicide pris dans le groupe des composés comprenant

(B1) triflusulfuron-méthyle,
(B2) phénmedipham, clopyralid,
(B3) haloxyfop-P et ses esters, haloxyfop et ses esters et
(B4) cycloxydim et cléthodim,

et les cultures de betterave sucrière sont tolérantes vis-à-vis des herbicides (A) et (B) contenus dans la combinaison, éventuellement en présence de phytoprotecteurs.

**2.** Utilisation de combinaisons d'herbicides pour la lutte contre les mauvaises herbes dans des cultures de betterave sucrière, **caractérisée en ce que** la combinaison d'herbicides concernée présente une teneur efficace en

(A) l'herbicide à spectre large glyphosate-isopropylammonium (A2)
et

(B) un herbicide du groupe des composés comprenant

(B1) éthofumésate,
(B3) fénoxaprop-P et ses esters, fénoxaprop et ses esters, fluazifop-P et ses esters, fluazifop et ses esters, haloxyfop-P et ses esters, haloxyfop et ses esters et
(B4) séthoxydim, cycloxydim et cléthodim,

et les cultures de betterave sucrière sont tolérantes vis-à-vis des herbicides (A) et (B) contenus dans la combinaison, éventuellement en présence de phytoprotecteurs.

**3.** Utilisation selon l'une des revendications 1 à 2, **caractérisée en ce qu'**on utilise les combinaisons d'herbicides en présence d'autres substances actives phytosanitaires.

**4.** Utilisation selon l'une des revendications 1 à 3, **caractérisée en ce qu'**on utilise les combinaisons d'herbicides conjointement avec des adjuvants et des adjuvants de formulation usuels dans le domaine des phytosanitaires.

**5.** Procédé pour la lutte contre les mauvaises herbes dans des cultures de betterave sucrière, **caractérisé en ce qu'**on applique les herbicides de la combinaison d'herbicides, définie selon une ou plusieurs des revendications 1 à 3, conjointement ou séparément dans un procédé de prélevée, de post-levée ou dans un procédé de prélevée et de post-levée, aux plantes, aux parties de plantes, aux grains ou à la surface cultivable.

**6.** Composition herbicide **caractérisée en ce qu'**elle contient une combinaison présentant une teneur efficace en

(A) l'herbicide à spectre large glufosinate-ammonium (A1) et un herbicide (B) pris dans le groupe des composés comprenant

(B1') triflusulfuron-méthyle,
(B2') phénmedipham, clopyralide,
(B3') haloxyfop-P-méthyle, et
(B4') cycloxydim et cléthodim, et éventuellement des additifs et des adjuvants de formulation usuels dans le domaine des phytosanitaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9809525 A
- US 4671819 A
- US 5183492 A
- EP 496701 A
- EP 0808569 A
- WO 9634528 A
- EP 0242246 A
- EP 242236 A
- EP 257542 A
- EP 275957 A
- EP 0513054 A
- WO 9200377 A
- EP 115673 A
- EP 409815 A
- EP 0221044 A
- EP 0131624 A
- WO 9211376 A
- WO 9214827 A
- WO 9119806 A
- EP 0257993 A
- US 5013659 A
- EP 0142924 A
- EP 0193259 A
- WO 9113972 A
- WO 9802526 A
- WO 9802527 A
- WO 982562 A
- EP 0476555 A
- EP 0048436 A
- EP 0336151 A
- US 4400196 A
- EP 0502014 A


### In der Beschreibung aufgeführte Nicht-Patentliteratur


- Pesticide Manual. British Crop Protection Council, 1997
- The Pesticide Manual. British Crop Protection Council, 1997, 643-645
- The Pesticide Manual. British Crop Protection Council, 1997, 120-121
- **ZEITSCHRIFT.** *Zuckerrübe,* 1998, vol. 47, 217 ff
- The Pesticide Manual. British Crop Protection Council, 1997, 646-649
- *Zuckerrübe,* 1998, vol. 47, 217 ff
- The Pesticide Manual. British Crop Protection Council, 1997
- **SAMBROOK et al.** Molecular Cloning, A Laboratory Manual. Cold Spring Harbor Laboratory Press, 1989
- **WINNACKER.** Gene und Klone. VCH, 1996
- **CHRISTOU.** *Trends in Plant Science,* 1996, vol. 1, 423-431
- **BRAUN et al.** *EMBO J.,* 1992, vol. 11, 3219-3227
- **WOLTER et al.** *Proc. Natl. Acad. Sci. USA,* 1988, vol. 85, 846-850
- **SONNEWALD et al.** *Plant J.,* 1991, vol. 1, 95-106
- **WINNACKER-KÜCHLER.** Chemische Technologie. C. Hauser Verlag, 1986, vol. 7
- **VAN VALKENBURG.** Pesti- cides Formulations. Marcel Dekker, 1973
- **K. MARTENS.** Spray Drying Handbook. G. Goodwin Ltd, 1979
- **WATKINS.** Handbook of Insecticide Dust Diluents and Carriers. Darland Books
- **H.V. OLPHEN.** Introduction to Clay Colloid Chemistry. J. Wiley & Sons
- **MARSDEN.** Solvents Guide. Interscience, 1950
- **MCCUTCHEON'S.** Detergents and Emulsifiers Annual. MC Publ. Corp,
- **SISLEY ; WOOD.** Encyclopedia of Surface Active Egents. Chem. Publ. Co. Inc, 1964
- **SCHÖNFELDT.** Grenzflächenaktive Äthylenoxidaddukte. Wiss. Verlagsgesellschaft, 1976
- **WINNACKER-KÜCHFER.** Chemische Technologie. C. Hauser Verlag, 1986, vol. 7
- Factors Affecting Herbicidal Activity and Selectivity. *Proc. EWRS Symp,* 1988, 227-232
- **S. R. COLBY.** *Weeds,* 1967, vol. 15, 20-22